# EUROPÄISCHE PATENTANMELDUNG

(11) **EP 2 508 060 A1**
(43) Veröffentlichungstag der Anmeldung: **10.10.2012**
(21) Anmeldenummer: 12401050.5
(22) Anmeldetag: 30.03.2012
(51) Int. Cl.: A01C 15/00

(54) **Anhängevorrichtung**

(30) Priorität: 04.04.2011 DE 102011001761
(71) Anmelder: Amazonen-Werke H. Dreyer GmbH & Co. KG, 49205 Hasbergen (DE)
(72) Erfinder: Tiessen, Reimer Uwe, 26135 Oldenburg (DE)

(57) **Zusammenfassung**

Vorratsbehälter (1) einer pneumatischen Verteilmaschine, der unter einem Luftüberdruck während des Ausbringvorganges des sich im Vorratsbehälter (1) befindlichen Materials gesetzt wird und in seinen oberen Bereich zumindest eine Einfüllöffnung (3) aufweist, wobei die Einfüllöffnung (3) durch zumindest ein Deckelelement (2) zumindest annähernd druckdicht verschließbar ist, wobei zwischen dem Deckel (2) mit und der Einfüllöffnung (3) eine Dichtleiste (10) angeordnet ist. Um gleichzeitig sicherzustellen, dass sowohl eine sichere Abdichtung durch die Dichtleiste zwischen Einfüllöffnung (3) und Deckelelement (2) als auch, dass kein Material im Bereich der Einfüllöffnung (3) liegen bleibt, gewährleistet ist, ist vorgesehen, dass an dem Deckelelement (2) eine umlaufende und mit dem oberen äußeren Rand (5,6) der Einfüllöffnung (3) abdichtend zusammenwirkende Dichtleiste (10) angeordnet ist, dass die Einlauföffnung (3) in dem Bereich, an den die sich an dem Deckelelement (2) befindliche Dichtleiste (10) abdichtend anlegt, einen umlaufenden und von außen schräg nach innen-unten verlaufenden Öffnungsrandbereich (5,6) aufweist.

## Beschreibung

Die Erfindung betrifft einen Vorratsbehälter einer pneumatischen Verteilmaschine gemäß des Oberbegriffes des Patentanspruches 1.

Ein derartiger Vorratsbehälter einer pneumatischen Verteilmaschine ist in der EP 2 286 651 A2 beschrieben. Dieser Vorratsbehälter weist eine Einfüllöffnung auf, die über ein die Einfüllöffnung übergreifendes Deckelelement abdichtend zu verschließen ist. Zwischen dem Deckelelement und der Einfüllöffnung ist eine Dichtleiste angeordnet. Die Dichtleiste ist auf der die Einfüllöffnung umgebenen ebenen Fläche des Vorratsbehälters angeordnet. Beim Einfüllen von auszubringendem Material in den Vorratsbehälter kann einzufüllendes Material auf der Dichtleiste oder auf der ebenen, die Einfüllöffnung umgebene Fläche liegen bleiben, welches die ausreichende Abdichtung zwischen Deckelelement und Vorratsbehälter erschwert oder behindert. Weiterhin hat sich gezeigt, dass die zwischen der ebenen Fläche, die die Einfüllöffnung umgibt, und dem Deckel angeordnete Dichtleiste bei einem hohen Luftdruck im Vorratsbehälter aufgrund der auf die Dichtleiste einwirkenden Kräfte nach außen gedrückt wird, so dass die Abdichtung nicht in jedem Falle gewährleistet ist.

Der Erfindung liegt die Aufgabe zu Grunde, gleichzeitig sicherzustellen, dass sowohl eine sichere Abdichtung durch die Dichtleiste zwischen Einfüllöffnung und Deckelelement als auch, dass kein Material im Bereich der Einfüllöffnung liegen bleibt, gewährleistet ist.

Diese Aufgabe wird erfindungsgemäß dadurch gelöst, dass an dem Deckelelement eine umlaufende und mit dem oberen äußeren Rand der Einfüllöffnung abdichtend zusammenwirkende Dichtleiste angeordnet ist, dass die Einlauföffnung in dem Bereich, an den die sich an dem Deckelelement befindliche Dichtleiste abdichtend anlegt, einen umlaufenden und von außen schräg nach innen-unten verlaufenden Öffnungsrandbereich aufweist.

Infolge dieser Maßnahmen wird durch den schräg verlaufenden Öffnungsrandbereich sichergestellt, dass einerseits beim Befüllvorgang des Vorratsbehälters mit auszubringendem Material kein Material im Öffnungsrandbereich der Behältereinfüllöffnung liegen bleibt, und dass andererseits sich die Dichtleiste durch den im Vorratsbehälter herrschenden Luftüberdruck von innen an den schräg verlaufenden Öffnungsrandbereich gedrückt wird, so dass der Vorratsbehälter sicher abgedichtet wird.

Hierbei hat sich gezeigt, dass eine besonders gute Abdichtung erreicht wird, wenn die Dichtleiste als Hohlkammerdichtleiste ausgebildet ist.

Der schräg verlaufende Öffnungsrandbereich der Einfüllöffnung des Vorratsbehälters lässt sich in einfacher Weise dadurch herstellen, dass zumindest der jeweilige geradlinig von außen schräg nach innen-unten verlaufende Öffnungsrandbereich durch eine Abkantung der Behälterwand nach innen gebildet wird.

Um sicherzustellen, dass möglichst kein Material auf der schräg verlaufenden Fläche des Öffnungsrandbereiches des Vorratsbehälters liegen bleibt, ist vorgesehen, dass die Schräge des schräg von oben - außen schräg nach innen - unten verlaufender Öffnungsbereich zumindest 40°, vorzugsweise etwa 55° zur Vertikalen beträgt.

Weitere Einzelheiten der Erfindung sind der Beispielsbeschreibung zu entnehmen. Die Zeichnungen zeigen
- Fig.1: den oberen Bereich des Vorratsbehälters einer landwirtschaftlichen Verteilmaschine mit in geschlossener Stellung sich befindlichem Deckelelement in perspektivischer Darstellung,
- Fig.2: den oberen Bereich des Vorratsbehälters einer landwirtschaftlichen Verteilmaschine mit in Öffnungsstellung sich befindlichem Deckelelement in perspektivischer Darstellung,
- Fig.3: den Abdichtbereich des Behälters mit in Öffnungsstellung sich befindlichem Deckelelement gemäß Fig.2 in der Ansicht III - III im vergrößerten Maßstab und
- Fig.4: den Abdichtbereich des Behälters mit in geschlossener Stellung sich befindlichem Deckelelement gemäß Fig.1 in der Darstellung gemäß Fig.3.

Der Vorratsbehälter 1 mit dem Deckelelement 2 ist für eine pneumatische Verteilmaschine, beispielsweise Sämaschine oder den Düngerstreuer mit einem pneumatischen Druckdosiersystem vorgesehen. Bei einem derartigen Druckdosiersystem wird der Vorratsbehälter 1 mit einem Luftüberdruck gegenüber dem Atmosphärendruck beaufschlagt. Hierzu muss die Einfüllöffnung 3 des Vorratsbehälters 1 mit einem Deckelelement 2 druckdicht verschlossen werden.

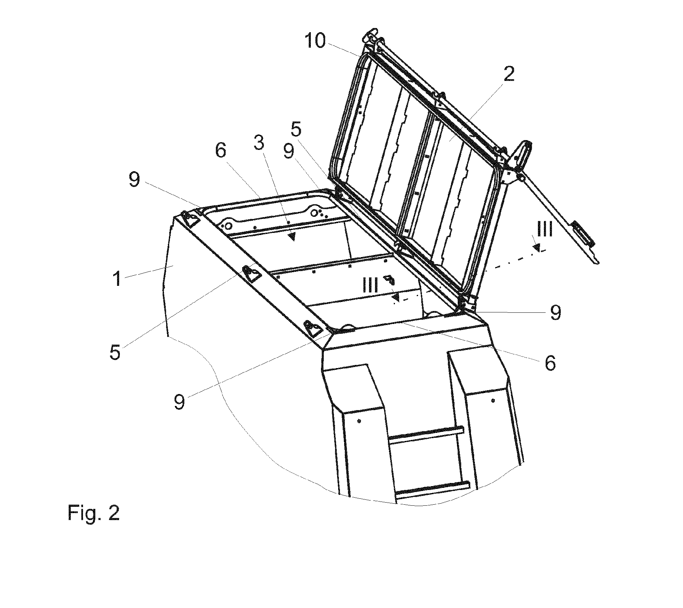

Die Einfüllöffnung 3 ist dem oberen Bereich des Vorratsbehälters 1, im Ausführungsbeispiel der oberen Vorratsbehälterwand angeordnet. Hierbei weist die Einfüllöffnung 3 eine größere Form auf, die in etwa der größten Querschnittsform des Vorratsbehälters 1 in dem oberen Bereich entspricht, wie beispielsweise der Fig. 2 zu entnehmen ist.

Die Einfüllöffnung 3 weist in ihrem oberen Bereich ein umlaufenden und von oben - außen schräg nach unten - innen verlaufenden Öffnungsrandbereich 4 mit den geradlinig verlaufenden Längs- und Querseiten 5 und 6 auf. Der geradlinig von oben außen schräg nach unten verlaufende Öffnungsrandbereich 5 und 6 ist jeweils durch eine Abkantung der Behälterwand des Vorratsbehälters 1 nach innen gebildet. Die Schräge 7, d.h. des Winkels des schräg von außen nach innen - unten verlaufenden Öffnungsbereiches 5 und 6 beträgt zumindest 40°, vorzugsweise etwa 55° zur Vertikalen 8. Aufgrund dieser Schräge 7 ist sichergestellt, dass beim Befüllvorgang keine Saatgutkörner oder Düngerkörner auf diesem Behälterbereich 5 und 6 liegen bleiben.

In den Eckbereichen zwischen den geradlinig verlaufenden Längs- und Querseiten der Einfüllöffnung des Behälters sind bogenartige Eckformteile 9 angeordnet, die mit den übrigen Behälterwänden 5, 6 verschweißt sein können.

An dem Deckelelement 2 ist eine umlaufende Dichtleiste 10, die als eine Hohlkammer 11 aufweisende Hohlkammerdichtleiste ausgebildet ist angeordnet. Der Verlauf und die Ausgestaltung der Dichtleiste 10 entspricht der Kontur des Öffnungsrandbereiches des Deckelelementes 2.

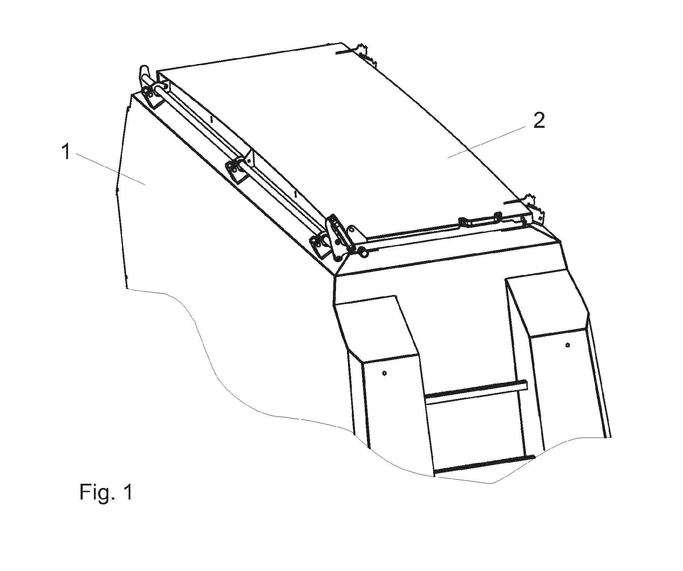

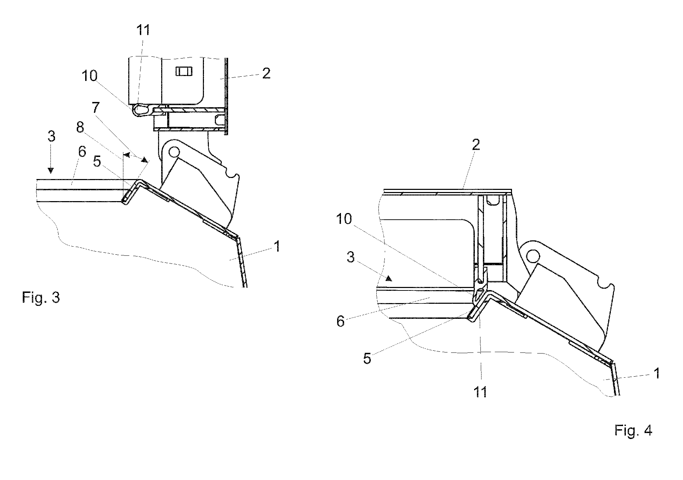

Wenn das Deckelelement 2 geschlossen ist, wird die die Dichtleiste 10 mit dem schräg verlaufenden oberen äußeren Öffnungsrandbereich 5 und 6 abdichtend zusammen. Wenn der Deckel 2 sich Schließposition gemäß Fig. 1 und 4 befindet, presst sich die Hohlkammerdichtung 10 auf die schräge Fläche 5 und 6. Wenn der Luftdruck in dem Vorratsbehälter 1 steigt, wird die Hohlkammerdichtung 10 gegen die schrägen umlaufenden Fläche 5 und 6 gedrückt, wie Fig. 4 zeigt. Somit wird der Vorratsbehälter 1 durch das Deckelelement 2 und die Hohlkammerdichtung 10 abgedichtet.

## Patentansprüche

1. Vorratsbehälter einer pneumatischen Verteilmaschine, der unter einem Luftüberdruck während des Ausbringvorganges des sich im Vorratsbehälter befindlichen Materials gesetzt wird und in seinen oberen Bereich zumindest eine Einfüllöffnung aufweist, wobei die Einfüllöffnung durch zumindest ein Deckelelement zumindest annähernd druckdicht verschließbar ist, wobei zwischen dem Deckel mit und der Einfüllöffnung eine Dichtleiste angeordnet ist, **dadurch gekennzeichnet, dass** an dem Deckelelement (2) eine umlaufende und mit dem oberen äußeren Rand (5, 6) der Einfüllöffnung (3) abdichtend zusammenwirkende Dichtleiste (10) angeordnet ist, dass die Einlauföffnung (3) in dem Bereich (5, 6), an den die sich an dem Deckelelement (2) befindliche Dichtleiste (10) abdichtend anlegt, einen umlaufenden und von außen schräg nach innen-unten verlaufenden Öffnungsrandbereich (5, 6) aufweist.

2. Vorratsbehälter nach Anspruch 1, **dadurch gekennzeichnet, dass** die Dichtleiste (10) als Hohlkammerdichtleiste ausgebildet ist.

3. Vorratsbehälter nach zumindest einem der vorstehenden Ansprüche, **dadurch gekennzeichnet, dass** zumindest der jeweilige geradlinig von außen schräg nach innen-unten verlaufende Öffnungsrandbereich (5, 6) durch eine Abkantung der Behälterwand nach innen gebildet wird.

4. Vorratsbehälter nach zumindest einem der vorstehenden Ansprüche, **dadurch gekennzeichnet, dass** die Schräge (7) des schräg von außen schräg nach innen - unten verlaufender Öffnungsbereich (3) zumindest 40°, vorzugsweise etwa 55° zur Vertikalen (8) beträgt.
